Europäisches Patentamt

European Patent Office

Office européen des brevets

(19)

(11) Numéro de publication : **0 456 563 A1**

(12) # DEMANDE DE BREVET EUROPEEN

(21) Numéro de dépôt : **91401173.9**

(22) Date de dépôt : **03.05.91**

(51) Int. Cl.⁵ : **F16H 1/455, B60K 17/35, B60K 17/20**

(30) Priorité : **11.05.90 FR 9005907**

(43) Date de publication de la demande :
**13.11.91 Bulletin 91/46**

(84) Etats contractants désignés :
**DE ES FR GB IT**

(71) Demandeur : **GLAENZER SPICER**
**10 Rue Jean-Pierre Timbaud**
**F-78300 Poissy (FR)**

(72) Inventeur : **Guimbretiere, Pierre**
**103 Route de St-Germain**
**F-78640 Neauphle-Le-Château (FR)**

(74) Mandataire : **Moncheny, Michel et al**
**c/o Cabinet Lavoix 2 Place d'Estienne d'Orves**
**F-75441 Paris Cedex 09 (FR)**

(54) **Dispositif de transmission à différentiel et accouplement à glissement contrôlé.**

(57)    Ce dispositif, comportant un boîtier (10), un organe d'entrée et deux organes de sortie (14, 15), ainsi qu'un dispositif d'accouplement (23) à glissement contrôlé, disposé entre deux desdits organes d'entrée et de sortie, est caractérisé en ce que le différentiel comporte au moins un organe (14) mobile axialement sous l'effet d'un couple qui lui est appliqué, le déplacement de cet organe étant utilisé pour modifier les caractéristiques de fonctionnement de l'accouplement à glissement contrôlé.

On réalise ainsi un différentiel à glissement autocontrôlé en fonction du couple et de la différence de vitesse entre les organes de sortie, dont la loi de variation est sensiblement améliorée par rapport à celle des dispositifs connus.

FIG. 1

EP 0 456 563 A1

La présente invention concerne les transmissions à différentiel utilisées notamment dans les véhicules automobiles.

Ces différentiels comprennent un organe d'entrée et deux organes de sortie montés rotatifs autour d'un même axe, les deux organes de sortie étant reliés, dans un exemple d'implantation, par des arbres latéraux de transmission à des roues motrices du véhicule. Dans une autre configuration les deux organes de sortie peuvent être reliés, respectivement à l'organe d'entrée de deux autres différentiels.

On a cherché à améliorer le fonctionnement de ces différentiels en leur associant des dispositifs de blocage ou de limitation du glissement.

Un premier type de différentiel auto-bloquant comprend au moins un embrayage à friction interposé entre deux desdits organes de sortie et d'entrée, cet embrayage étant commandé par au moins un organe mobile à l'intérieur du différentiel, dont la position est fonction du couple qui transite par ce différentiel.

Une seconde tentative pour améliorer le fonctionnement d'un différentiel a consisté à lui associer un dispositif d'accouplement à disques et à fluide visqueux travaillant au cisaillement, pouvant être désigné par l'expression "viscocoupleur", un tel dispositif étant interposé entre deux desdits organes d'entrée et de sortie du différentiel. Dans ce second cas c'est la différence de vitesse de rotation entre les deux organes entre lesquels est interposé le dispositif viscocoupleur qui détermine le taux de freinage de ce dernier.

Cependant ces deux types de dispositifs présentent des inconvénients qui résultent du fait que dans un cas la commande de l'embrayage ne prend pratiquement en compte que les couples transitant par le différentiel ainsi que le signe de la différence des vitesses entre les organes de sortie, tandis que dans le second cas on ne prend en compte que la différence des vitesses entre les organes entre lesquels le dispositif viscocoupleur est interposé. Il en résulte dans les deux cas des caractéristiques immuables et donc inadaptées, de variation du couple en fonction de la différence des vitesses.

Ces inconvénients se manifestent notamment, pour le premier type de dispositif par des difficultés de braquage lors des manoeuvres de parking, ou bien encore par la création de couples transférés importants et dont le sens peut changer brutalement, entre roues ou entre essieux, alors que le sol n'autorise que des couples propulseurs ou freineurs faibles, et pour le deuxième type par une certaine inadaptation avec l'usage de systèmes de freinage à antiblocage des roues (ABS).

Le but de cette invention est de proposer un dispositif qui permette de remédier à la plupart de ces inconvénients et qui présente une plage d'utilisation plus large que les dispositifs connus.

A cet effet, l'invention a pour objet un différentiel comportant un organe d'entrée et deux organes de sortie, ainsi qu'un dispositif d'accouplement à glissement contrôlé, disposé entre deux desdits organes d'entrée et de sortie, caractérisé en ce qu'au moins l'un desdits organes d'entrée et de sortie est mobile axialement sous l'effet d'un couple qui lui est appliqué, le déplacement de cet organe étant utilisé pour modifier la caractéristique de fonctionnement du dispositif d'accouplement à glissement contrôlé.

Suivant d'autres caractéristiques :

– le dispositif d'accouplement à glissement contrôlé est du type à disques et à fluide visqueux travaillant au cisaillement ;

– le déplacement dudit organe mobile fait varier la pression interne du fluide visqueux et/ou la distance entre les disques dans le dispositif d'accouplement;

– l'organe mobile comporte un prolongement axial qui peut coulisser à joint étanche entre une partie du boîtier et un arbre, l'extrémité de ce prolongement axial délimitant une partie de l'enceinte du dispositif d'accouplement à glissement contrôlé, et/ou pouvant coopérer avec un plateau de rapprochement des disques, prévu dans le dispositif d'accouplement;

– le boîtier comporte une paroi séparant une première enceinte contenant le différentiel d'une deuxième enceinte contenant le dispositif d'accouplement, cette paroi comportant au moins un perçage dans lequel est reçu un organe coulissant dont une extrémité est en appui contre l'organe mobile et dont l'autre extrémité délimite en partie la deuxième enceinte et/ou peut venir en appui contre un plateau de serrage des disques du dispositif d'accouplement;

– le dispositif d'accouplement comporte un couvercle et il est prévu un accouplement à dentures frontales entre l'organe mobile du différentiel et ce couvercle.

L'invention va être décrite plus en détail ci-dessous en se référant aux dessins annexés, donnés uniquement à titre d'exemple et sur lesquels :

La Fig.1 est une demi-vue en coupe schématique d'un premier mode de réalisation de différentiel selon l'invention;

La Fig. 2 est une vue partielle en coupe d'une variante;

Les Fig. 3 et 4 sont deux demi-vues en coupe schématique de deux autres variantes de réalisation;

La Fig. 5 est une vue en coupe d'un différentiel correspondant à une autre variante;

La Fig. 6 est une vue en coupe suivant la ligne 6-6 de la Fig. 5;

La Fig. 7 est une vue en coupe d'une autre variante;

La Fig. 8 est une vue en coupe suivant la ligne 8-8 de la Fig.7;

La Fig. 9 est une vue en coupe partielle représentant une dernière variante de réalisation; et

La Fig. 10 est un graphique illustrant les avantages du dispositif suivant l'invention.

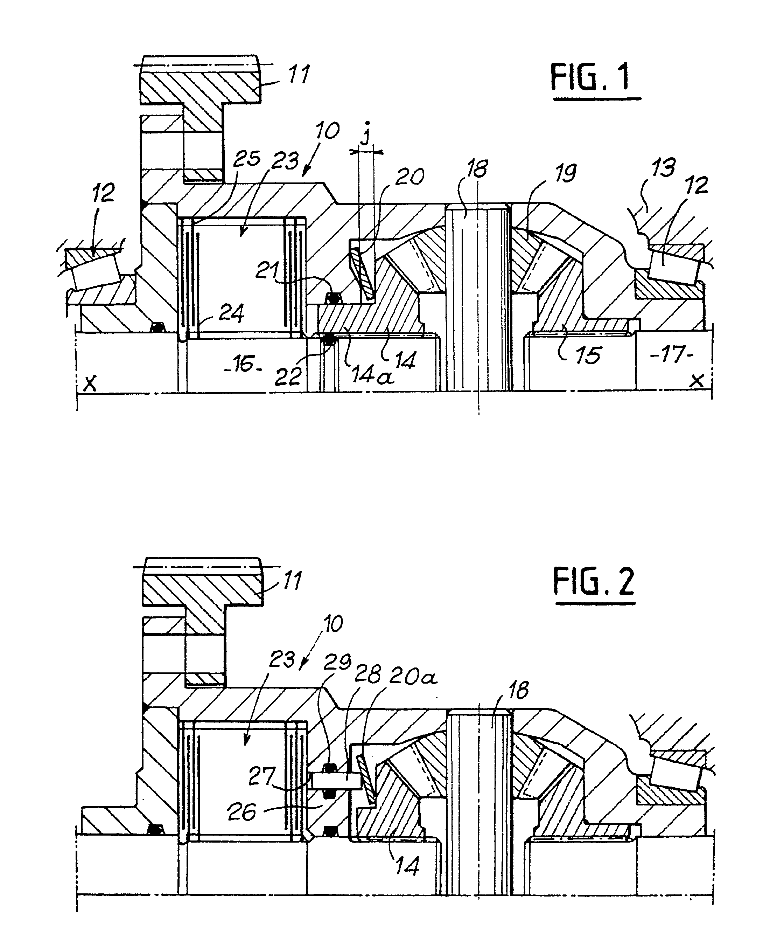

On voit sur la Fig. 1 un différentiel comprenant un boîtier 10 solidaire d'une couronne 11 et constituant l'organe d'entrée de ce différentiel, ce boîtier étant monté rotatif dans des paliers 12 par rapport à un bâti 13. Dans ce boîtier sont montés rotatifs autour d'un même axe X-X deux planétaires 14, 15 qui constituent les organes de sortie du différentiel et qui sont reliés respectivement à des arbres 16 et 17. De plus le boîtier porte au moins un axe 18 porte-satellites sur lequel sont disposés des satellites 19 engrenant avec les planétaires 14, 15. Le planétaire 15 s'appuie, de façon classique, sur le boîtier du différentiel tandis que le planétaire 14 est monté coulissant par rapport à ce boîtier, son moyeu comportant un prolongement axial 14a. Un certain jeu axial $j$ est prévu entre ce planétaire et la face adjacente du boîtier. Un ressort constitué par exemple par une rondelle Belleville 20 peut être prévu entre le boîtier et le planétaire. Deux organes d'étanchéité 21, 22 sont par ailleurs disposés respectivement entre les parois interne et externe du prolongement 14a et le boîtier 10 et l'arbre 16.

Logé à l'intérieur du boitier 10, du côté du planétaire 14 est disposé un dispositif d'accouplement 23 à glissement contrôlé, du type comprenant deux séries de disques alternés 24, 25, une première série 24 étant rendue solidaire en rotation par des cannelures de l'arbre de sortie 16 associé au planétaire 14, tandis que l'autre série de disques 25 est rendue solidaire en rotation au moyen de cannelures du boîtier de différentiel. Ces disques baignent dans un fluide visqueux travaillant au cisaillement qui peut être par exemple une huile silicone.

Le fonctionnement d'un tel dispositif est le suivant : en l'absence de couple moteur, le dispositif d'accouplement 23 est seulement piloté ou commandé par la différence des vitesses de rotation entre le boîtier 10 et l'arbre de sortie 16 associé au planétaire 14. Ce dernier occupe sa position représentée sur la Fig. 1. La caractéristique Cv = f ($\Delta$ n) étant choisie assez faible (où Cv est le couple résistant dû au viscocoupleur et $\Delta_n$ la différence des vitesses de rotation entre le boîtier et l'arbre 16), un tel ensemble oppose peu de réluctance aux manoeuvres à très faible vitesse.

Dès qu'un couple moteur est transmis aux roues, des efforts s'exercent entre les dentures des satellites et des planétaires, ces derniers ayant tendance à se mettre en appui sur le boîtier. Le planétaire 14 est donc amené à se déplacer en comprimant le ressort 20. Ce déplacement a pour effet de diminuer le volume offert au fluide visqueux dans l'enceinte délimitée par le boîtier 10, l'arbre 16 et l'extrémité du planétaire 14. Il en résulte une diminution du volume de l'enceinte et une augmentation de la pression interne du fluide et donc une modification de la loi caractéristique Cv = f ($\Delta$n), ce qui rend le viscocoupleur d'autant plus efficace que le couple moteur est important.

Dans le mode de réalisation de la Fig. 2, les mêmes numéros de référence désignent des éléments correspondant à ceux de la Fig. 1.

L'enceinte dans laquelle se trouve le viscocoupleur 23 est séparée de la partie du boîtier 10 recevant le mécanisme différentiel par une paroi 26 du boîtier, étanche par rapport à l'arbre 16. Le prolongement axial 14a du planétaire ne s'étend pas entre cette paroi et l'arbre 16. Au moins un perçage 27 est ménagé dans la paroi 26, dans lequel est reçue une navette coulissante 28 entourée par un joint d'étanchéité 29. Cette navette est en appui directement ou par l'intermédiaire d'un ressort 20a contre une face du planétaire, de sorte que ce dispositif fonctionne exactement comme le précédent, avec cette différence que la variation de la caractéristique du viscocoupleur peut être plus progressive que dans le mode de réalisation de la Fig. 1 puisque la quantité de fluide déplacée est plus faible.

Bien entendu le différentiel peut comporter plusieurs navettes telles que la navette 28 et le cas échéant ces navettes peuvent avoir des longueurs différentes de façon à pouvoir moduler la variation de la caractéristique obtenue lors du déplacement du planétaire.

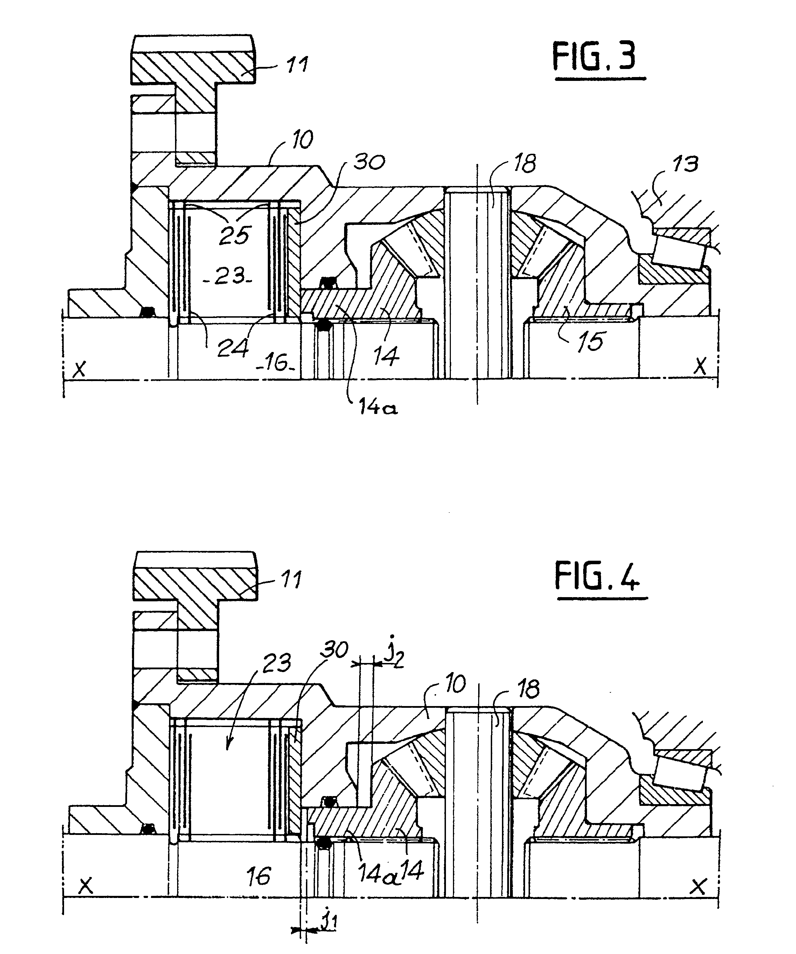

Le différentiel représenté à la Fig. 3 comporte un certain nombre d'organes analogues à ceux déjà décrits à propos des Fig. 1 et 2 et portant par conséquent les mêmes références. Dans ce mode de réalisation, le viscocoupleur comporte un plateau supplémentaire 30 libre de se déplacer axialement mais au repos en appui sur le boîtier. L'extrémité du planétaire 14 vient juste au contact de ce plateau, lorsque le couple moteur est nul. La section du prolongement axial du planétaire 14 peut être relativement faible. D'une façon générale le fonctionnement du dispositif est analogue à celui décrit à propos des Fig. 1 et 2. Cependant dans le cas de la Fig. 3, la modification de la caractéristique du dispositif viscocoupleur est obtenue lors d'un déplacement du planétaire 14 vers la gauche, par un déplacement correspondant du plateau 30, qui provoque une réduction de l'écartement entre les disques 24, 25.

Dans le mode de réalisation de la Fig. 4, on a associé les deux types de solution illustrés aux Fig. 1 et 3. A cet effet il est prévu un jeu $j_1$ entre l'extrémité arrière du prolongement axial 14a du planétaire 14 et le plateau 30, ce jeu étant inférieur à celui $j_2$ qui existe entre la face arrière du planétaire et la face adjacente du boîtier. On comprend donc que dans ce cas, dans un premier temps le déplacement du planétaire 14 vers la gauche provoque une modification de la caractéristique du viscocoupleur par modification de la pression interne du fluide, tandis que dans un second temps c'est le déplacement du plateau 30 et la réduction de l'écartement entre les disques qui modifient cette caractéristique.

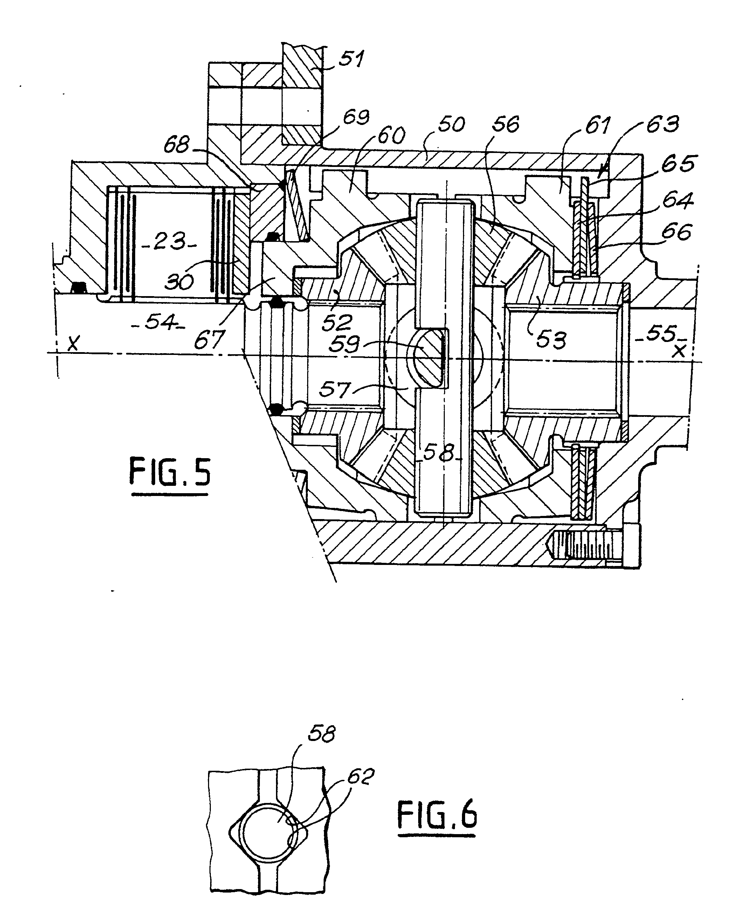

Le différentiel représenté à la Fig. 5 comprend un boîtier 50 portant une couronne 51, deux planétaires 52, 53 reliés par des cannelures à des arbres de sortie 54, 55 et deux jeux de satellites 56, 57 portés respectivement par deux axes 58, 59 disposés à angle droit. Ces deux axes reçoivent le couple de deux demi-coquilles 60, 61 montées coulissantes par cannelures à l'intérieur du boîtier et qui comportent des rampes opposées en V 62 (Fig. 6) entre lesquelles sont reçues les extrémités des axes porte-satellites. Entre la demi-coquille 61 située à droite sur le dessin et la paroi adjacente du boîtier est disposé un accouplement à friction 63 comprenant dans l'exemple représenté un disque solidaire 64 en rotation du planétaire 53 et un disque solidaire 65 en rotation du boîtier 50. Un ressort constitué par une rondelle Belleville 66 est disposé entre cet embrayage et la paroi d'extrémité du boîtier.

L'autre demi-coquille 60 comporte une partie 67 reçue à coulissement et à joints étanches entre l'arbre de sortie 54 et une paroi transversale 68 du boîtier. Un ressort constitué par une rondelle Belleville 69 est prévu entre cette demi-coquille et le boîtier. De l'autre côté de la paroi 68 est disposé un viscocoupleur 23 qui peut être réalisé comme représenté sur l'une quelconque des Fig. 1 à 4. Dans l'exemple choisi sur la Fig. 5, le coupleur comporte un plateau 30 contre lequel la face arrière de la demi-coquille 60 peut venir en appui, après s'être déplacée d'une certaine course vers la gauche.

Le fonctionnement de ce dispositif est analogue à celui décrit précédemment, à cette exception près que c'est la demi-coquille 60 qui détermine la modification de caractéristique de l'accouplement à fluide visqueux, en fonction du couple moteur à transmettre.

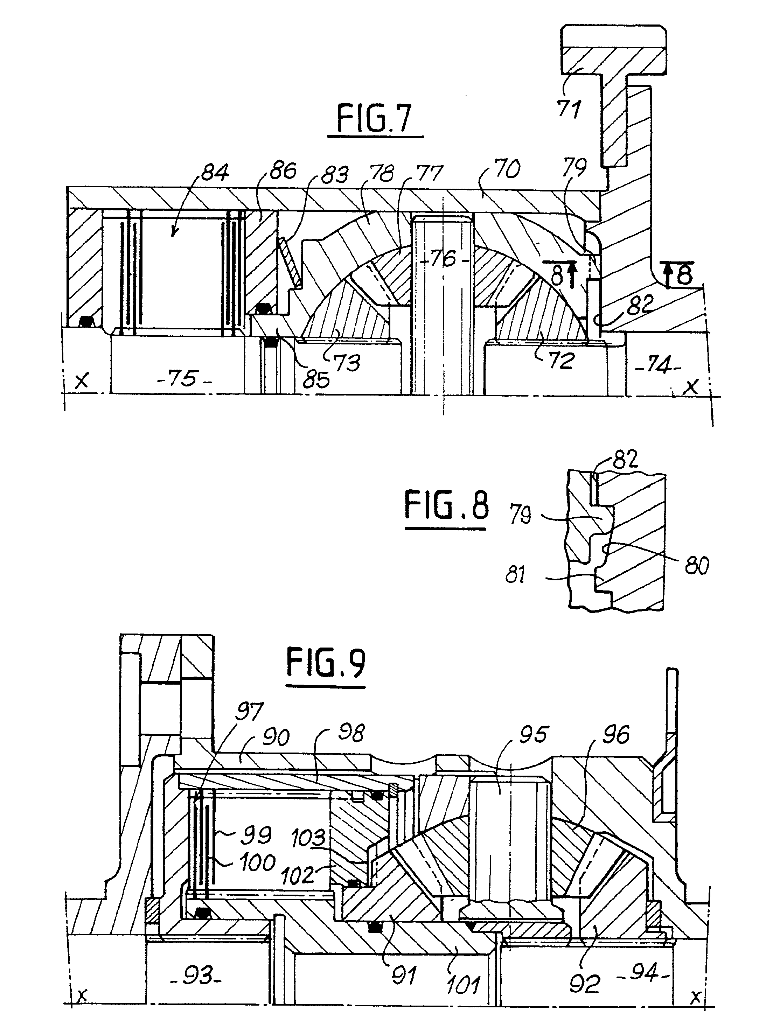

Le différentiel représenté aux Fig. 7 et 8 comprend comme précédemment un boîtier 70 solidaire d'une couronne 71, deux planétaires 72, 73 reliés à des arbres de transmission 74, 75, un axe porte-satellites 76 et des satellites 77. Dans ce cas, l'axe porte-satellites est porté par un boîtier intérieur 78 susceptible de coulisser axialement à l'intérieur du boîtier principal 70. Le boîtier intérieur et le boîtier extérieur comportent des moyens complémentaires permettant d'obtenir un déplacement axial du boîtier intérieur sous l'effet d'un déplacement angulaire relatif entre ces deux boîtiers. Ces moyens comprennent par exemple deux ergots 79 diamétralement opposés portés par le boîtier intérieur et deux rampes inclinées 80 se terminant par des butées 81, prévues sur la face en regard 82 du boîtier extérieur. Un ressort 83 est interposé entre les deux boîtiers.

Du côté opposé à ces rampes, le boîtier extérieur est complété pour comporter un dispositif d'accouplement 84 à fluide visqueux, tel que décrit à propos des exemples précédents et interposé entre le boîtier 70 et l'arbre 75. Le boîtier intérieur 78 comporte un prolongement axial 85 qui s'étend à joint étanche entre la paroi 86 du boîtier extérieur et l'arbre 75, comme dans l'exemple de la Fig. 1, le prolongement 14ª du planétaire 14.

En fonctionnement, en l'absence de couple, le viscocoupleur fonctionne sous une caractéristique faible qui est fonction des différences de vitesse existant entre l'organe d'entrée et l'arbre de sortie 75. Lorsqu'un couple moteur est transmis aux roues, un débattement angulaire tend à se produire entre le boîtier extérieur et le boîtier intérieur, ce qui provoque un déplacement de ce dernier vers la gauche en considérant la Fig. 7, et ce déplacement est utilisé comme dans les exemples précédents pour modifier la caractéristique de fonctionnement du viscocoupleur.

Enfin dans le mode de réalisation de la Fig. 9, le dispositif comprend un boîtier 90, deux planétaires 91, 92 solidaires respectivement, par cannelures, d'arbres de transmission 93, 94, un porte-satellites 95 et des satellites 96. Un dispositif viscocoupleur 97 est logé dans un boîtier 98 reçu à l'intérieur du bottier de différentiel et les deux séries de disques 99, 100 sont respectivement solidaires en rotation, l'une 99 du boîtier 98 et l'autre 100 d'un moyeu 101.

Le boîtier 98 est solidaire en rotation de l'arbre 93 et du planétaire 91, par l'intermédiaire d'un flasque ou couvercle 102 relié par des cannelures frontales 103 au planétaire 91. L'angle de pression de ces cannelures est choisi de façon à s'ajuster avec l'angle de pression de la denture du planétaire.

Le moyeu 101 est quant à lui solidaire en rotation de l'arbre 94, de sorte que le dispositif d'accouplement est interposé entre les deux organes de sortie du différentiel. C'est le léger déplacement axial du planétaire 91 qui provoque la variation de caractéristique du viscocoupleur.

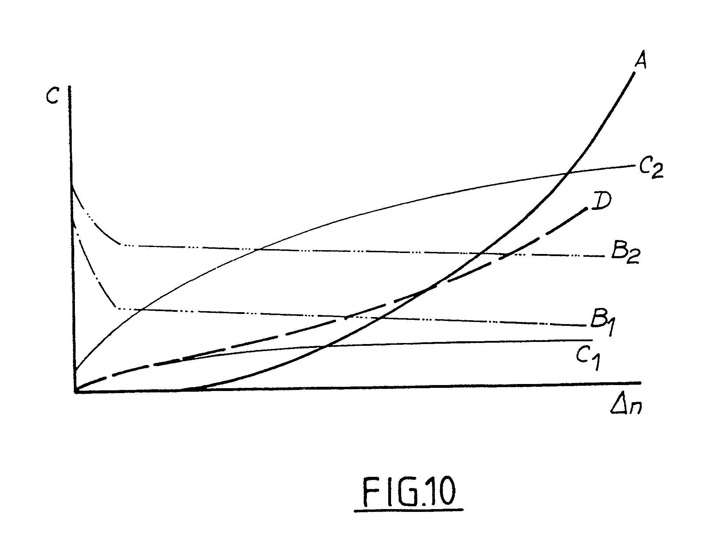

L'avantage de l'invention par rapport aux techniques antérieures est illustré sur la Fig. 10 où l'on a représenté sur un diagramme (C, Δn) les caractéristiques des deux solutions antérieures, de la solution préconisée ici ainsi qu'une caractéristique "idéale". Cette dernière est désignée par la référence A. Les courbes $B_1$ et $B_2$ correspondent à des solutions de la première catégorie (à embrayage à friction) pour deux tarages de valeurs différentes. Les courbes $C_1$ et $C_2$ illustrent deux caractéristiques de dispositifs connus à viscocoupleur. La courbe D correspondant à l'invention se rapproche davantage de la courbe idéale. A.

On notera qu'au moment de l'assemblage du dispositif, le viscocoupleur peut être mis en dépression ce qui peut permettre d'adopter une caractéristique de base ou nominale plus faible que celle représentée par la courbe $C_1$.

On notera également que sur les figures, les jeux axiaux tels que j, $j_1$, $j_2$ ont été volontairement exagérés.

**Revendications**

1. Dispositif de transmission, notamment pour véhicule automobile comprenant un différentiel comportant un organe d'entrée (10; 50, 60, 61; 70, 78; 90) et deux organes de sortie (14, 15; 52, 53; 72, 73; 91, 92), ainsi qu'un dispositif d'accouplement (23; 84; 97) à glissement contrôlé, disposé entre deux desdits organes d'entrée et de sortie, caractérisé en ce qu'au moins l'un desdits organes d'entrée et de sortie (14; 60; 78; 91) est mobile axialement sous l'effet d'un couple qui lui est appliqué, le déplacement de cet organe étant utilisé pour modifier la caractéristique de fonctionnement de l'accouplement à glissement contrôlé.

2. Dispositif suivant la revendication 1, caractérisé en ce que le dispositif d'accouplement est du type à disques et à fluide visqueux travaillant au cisaillement.

3. Dispositif suivant la revendication 1, caractérisé en ce que l'accouplement à fluide visqueux comporte une enceinte séparée de façon étanche de celle contenant le différentiel.

4. Dispositif suivant la revendication 2, caractérisé en ce que le déplacement dudit organe mobile fait varier la pression interne du fluide visqueux et/ou la distance entre les disques, dans le dispositif d'accouplement.

5. Dispositif suivant l'une quelconque des revendications 1 à 4, caractérisé en ce que l'organe mobile est l'un des planétaires (14; 91) du différentiel, qui est monté coulissant axialement dans le boîtier (10; 90).

6. Dispositif suivant l'une quelconque des revendications 1 à 4, caractérisé en ce que l'organe mobile est un organe intermédiaire (60; 78), monté coulissant dans le bottier (50; 70) parallèlement à l'axe commun (X-X) des organes d'entrée et de sortie et qui transmet le couple entre le bottier (50; 70) et au moins un porte-satellites (58, 59; 76).

7. Dispositif suivant la revendication 6, caractérisé en ce que l'organe intermédiaire est une demi-coquille (60) comportant des rampes inclinées (62) en appui contre au moins un axe porte-satellites (58, 59).

8. Dispositif suivant la revendication 6, caractérisé en ce que l'organe intermédiaire est un boîtier intérieur (78) portant au moins un axe porte-satellites (76), le boîtier (70) et le boîtier intérieur (78) comportant des moyens complémentaires (79, 80) permettant d'obtenir un déplacement axial du boîtier intérieur sous l'effet d'un déplacement angulaire relatif entre ces deux boîtiers.

9. Dispositif suivant l'une quelconque des revendications 5 à 8, caractérisé en ce que l'organe mobile (14; 60; 78) comporte un prolongement axial (14a; 67; 85) qui peut coulisser à joint étanche entre une partie du boîtier (10) et un arbre (16; 54; 75), l'extrémité de ce prolongement axial délimitant une partie de l'enceinte du dispositif d'accouplement à glissement contrôlé, et/ou pouvant coopérer avec un plateau (30) de rapprochement des disques, prévu dans le dispositif d'accouplement.

10. Dispositif suivant l'une quelconque des revendications 5 à 8, caractérisé en ce que le boîtier comporte une paroi (26) séparant une première enceinte contenant le différentiel d'une deuxième enceinte contenant le dispositif d'accouplement, cette paroi comportant au moins un perçage (27) dans lequel est reçu un organe coulissant (28) dont une extrémité est en appui contre l'organe mobile et dont l'autre extrémité délimite en partie la deuxième enceinte et/ou peut venir en appui contre un plateau de rapprochement des disques du dispositif d'accouplement.

11. Dispositif suivant l'une quelconque des revendications 5 à 8, caractérisé en ce que le dispositif d'accouplement comporte un couvercle (102) et il est prévu un accouplement à dentures frontales entre l'organe mobile du différentiel et ce couvercle.

12. Dispositif suivant l'une quelconque des revendications 1 à 11, caractérisé en ce qu'il est prévu au moins un organe élastique (20; 69; 83) de rappel de l'organe mobile (14; 60; 78) vers sa position dans laquelle il ne modifie pas les caractéristiques de fonctionnement du dispositif d'accouplement.

13. Dispositif suivant l'une quelconque des revendications 1 à 12, caractérisé en ce que le dispositif d'accouplement est disposé entre l'organe d'entrée (10; 50; 70) et l'un des deux organes de sortie du différentiel.

14. Dispositif suivant l'une quelconque des revendications 1 à 12, caractérisé en ce que le dispositif d'accouplement est disposé entre les deux arbres de sortie (93, 94) du différentiel.

15. Dispositif suivant l'une quelconque des revendications 2 à 14, caractérisé en ce que le dispositif d'accouplement à disques et fluide visqueux est mis en dépression lors de son assemblage.

FIG. 1

FIG. 2

FIG.3

FIG.4

51

69 60 50 56 61 63

68 65

64

66

-23-

30

-54-

52

67

59

53 -55-

57

58

# FIG.5

58

62

# FIG.6

## FIG.7

## FIG.8

## FIG.9

FIG.10

Office européen
des brevets

**RAPPORT DE RECHERCHE EUROPEENNE**

Numéro de la demande

EP    91 40 1173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-193160 (TOCHIGIFUGI SANGKYO) <br> * page 10, ligne 9 - page 11, ligne 12; figures 2, 6 * | 1, 2, 4, 6, 12-14 | F16H1/455 <br> B60K17/35 <br> B60K17/20 |
| A | | 7, 9, 11 | |
| | --- | | |
| X | DE-A-3609418 (ZAHNRADFABRIK FRIEDRICHSHAFEN AG) <br> * le document en entier * | 1, 2, 4, 6 | |
| | --- | | |
| A | DE-A-3630974 (STEYR-DAIMLER-PUCH AG) <br> * le document en entier * | 2, 4 | |
| | ----- | | |

**DOMAINES TECHNIQUES RECHERCHES (Int. Cl.5)**

F16H
F16D
B60K

Le présent rapport a été établi pour toutes les revendications

| Lieu de la recherche | Date d'achèvement de la recherche | Examinateur |
|---|---|---|
| LA HAYE | 13 AOUT 1991 | TOPP-BORN S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)